# EUROPEAN PATENT SPECIFICATION

(11) **EP 4 570 653 B1**
(45) Date of publication and mention of the grant of the patent: **23.09.2026**
(21) Application number: 24213255.3
(22) Date of filing: 15.11.2024
(51) Int. Cl.: B64D 9/00, B60P 7/13

(54) **MANUAL OVERRIDE AND POSITION SENSOR (MOPS) FOR AUTOMATIC LATCH**
MANUELLE ÜBERSTEUERUNG UND POSITIONSSENSOR (MOPS) FÜR AUTOMATISCHE VERRIEGELUNG
SURPASSEMENT MANUEL ET CAPTEUR DE POSITION (MOPS) POUR VERROU AUTOMATIQUE

(30) Priority: 15.12.2023 IN 202341085697; 06.03.2024 US 202418597004
(43) Date of publication of application: 18.06.2025
(73) Proprietor: Goodrich Corporation, Charlotte, NC 28217-4578 (US)
(72) Inventor: PEREIRA, Elvis, 560064 Bangalore, KA (IN); JAYAPRAKASH, Narain, 560097 Bangalore (IN); ADAVALATH PUTHIYAVEETTIL, Sayooj, 670702 Bangalore (IN); RAJAMANICKAM, Varun, 560066 Bengaluru (IN)
(74) Representative: Dehns

(56) References cited:
- CN-A- 110 723 430
- US-A1- 2019 061 946
- US-A1- 2019 248 269

## Description

### CROSS-REFERENCE TO RELATED APPLICATIONS

This application claims priority to, and the benefit of, India Provisional Patent Application No. 202341085697, filed December 15, 2023 and titled "MANUAL OVERRIDE AND POSITION SENSOR (MOPS) FOR AUTOMATIC LATCH."

### FIELD

The present disclosure generally relates to the field of cargo handling systems and, more particularly, to a manual override and position sensor (MOPS) for automatic latch.

### BACKGROUND

Today's rapidly evolving and uncertain world has driven the need for increased flexibility and modularity into modem aircraft cargo handling systems. The response to these requirements has led to the development of convertible cargo handling systems that may be easily reconfigured to handle many different mission profiles including bulk cargo, passengers, containerized cargo, additional fuel tanks, etc. Unit load devices (ULD) utilized in these cargo handling systems are typically available in two forms, i.e., pallets and containers. Latches utilized to restrain the ULDs in these cargo handling systems restrain the ULDs in longitudinal, lateral, and vertical directions within a cargo bay of an aircraft. Such latches prevent the ULD movement during taxi, take-off, in-flight, and landing. US 2019/0248269 A1 describes a cargo restraint system. CN 110 723 430 A describes an electronic locking device.

### SUMMARY

A cargo restraint assembly for a cargo handling system is disclosed, according to claim 1.

In various embodiments, responsive to the motor receiving a second command to revert to a set position after the restraint device has engaged the ULD, the motor rotates the motor coupling shaft in a second rotational direction opposite the first rotational direction to the set position.

In various embodiments, the second command to revert to the set position after the restraint device has engaged the ULD is generated based on a sensor indicator from at least one of a motor coupling shaft sensor or a latch coupling shaft sensor.

In various embodiments, responsive to the motor receiving a third command to deactivate the restraint device and disengage a unit load device (ULD), the motor rotates the motor coupling shaft in a second rotational direction opposite the first rotational direction. In various embodiments, responsive to the motor coupling shaft rotating in the second rotational direction, the motor coupling shaft rotates the latch coupling shaft in the second rotational direction. In various embodiments, responsive to the latch coupling shaft rotating in the second rotational direction, the latch coupling shaft rotates the torque transmitting pin in the second rotational direction thereby causing the restraint device to disengage the ULD.

In various embodiments, responsive to the motor receiving a fourth command to revert to a set position after the restraint device has disengaged the ULD, the motor rotates the motor coupling shaft in the second rotational direction to the set position.

In various embodiments, the fourth command to revert to the set position after the restraint device has disengaged the ULD is generated based on a sensor indicator from at least one of a motor coupling shaft sensor or a latch coupling shaft sensor.

In various embodiments, the torque transmitting pin is configured to translate outward in a first lateral direction for coupling to the automated latching mechanism. In various embodiments, the torque transmitting pin is configured to translate inward in a second lateral direction, opposite the first lateral direction, for at least one of assembly, disassembly, or maintenance of the restraint device.

Also disclosed herein is a cargo handling system according to claim 8.

Also disclosed herein is an aircraft according to claim 9.

The present disclosure may include any one or more of the individual features disclosed above and/or below alone or in any combination thereof, insofar as they fall within the scope of the appended claims. The foregoing features and elements may be combined in various combinations without exclusivity, unless expressly indicated herein otherwise. These features and elements as well as the operation of the disclosed embodiments will become more apparent in light of the following description and accompanying drawings.

The foregoing features and elements may be combined in any combination, without exclusivity, unless expressly indicated herein otherwise, insofar as they fall within the scope of the appended claims. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification, the scope of the present disclosure being defined by the appended claims. A more complete understanding of the present disclosure, however, may best be obtained by referring to the detailed description and claims when considered in connection with the drawing figures, wherein like numerals denote like elements.
FIG. 1A illustrates a schematic view of an aircraft being loaded with unit load devices (ULDs), in accordance with various embodiments.
FIG. 1B illustrates a portion of a cargo handling system, in accordance with various embodiments.
FIG. 2 illustrates a power drive unit (PDU) disposed in a tray portion of a cargo handling system, in accordance with various embodiments.
FIGS. 3A and 3B illustrate an isometric view and a cross-sectional view of a cargo restraint assembly including an automated latching mechanism coupled to a restraint device, in accordance with various embodiments.
FIGS. 4A and 4B illustrate an isometric view and an exploded view of an automated latching mechanism, in accordance with various embodiments.
FIGS. 5A, 5B, and 5C illustrate an isometric view and second end views of the motor coupling shaft and the latch coupling shaft, in accordance with various embodiments.
FIG. 6 illustrates an isometric view a controller coupled to an automated latching mechanism, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the appended claims. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a,'' "an" or "the" may include one or more than one and that reference to an item in the singular may also include the item in the plural. Further, all ranges may include upper and lower values and all ranges and ratio limits disclosed herein may be combined.

As stated previously, typical implementations for cargo loading systems utilize latches to restrain unit load devices (ULDs) in longitudinal, lateral, and vertical directions within a cargo bay of an aircraft. Such latches prevent the ULD movement during taxi, take-off, in-flight, and landing. However, such latches are operated by erecting and retracting the latches by hand or foot. This manual operation, i.e., by hand or by foot, consumes time which may, in turn, increase costs to airlines.

Disclosed herein are systems and methods for utilizing manual override and position sensors (MOPS) for automatically latching and unlatching ULDs in their respective positions. In various embodiments, the automated latching mechanism utilizes a latch coupling shaft that interfaces with a motor coupling shaft. In various embodiments, a first end of the latch coupling shaft is coupled to a torque transmitting pin of a modified shaft within the restraint device. In various embodiments, the torque transmitting pin is configured to translate outward in a first direction, i.e., a negative y-direction, for automated latching or unlatching of a ULD and is further configured to translate inward in a second direction, i.e., in a positive y-direction, opposite the first direction, for assembly, disassembly, or maintenance, among others. In various embodiments, a first end of the motor coupling shaft is coupled to a motor. In various embodiments, the motor is configured to rotate the motor coupling shaft from a set position in a counterclockwise direction about an axis and then rotate the motor coupling shaft in a clockwise direction about the axis back to the set position as well as rotate the motor coupling shaft from the set position in a clockwise direction about the axis and then rotate the motor coupling shaft in a counterclockwise direction about the axis back to the set position. In various embodiments, a second end of the motor coupling shaft interfaces with a second end of the latch coupling shaft. In various embodiments, responsive to the motor rotating the motor coupling shaft from the set position in the counterclockwise direction about the axis, the second end of the motor coupling shaft rotates the second end of the latch coupling shaft in the counterclockwise direction about the axis, which in turn causes torque transmitting pin to rotate in the counterclockwise direction about the axis causing the restraint device to engage the ULD. In various embodiments, the motor is then configured to rotate in a clockwise direction about the axis back to the set position. In various embodiments, responsive to the motor rotating the motor coupling shaft from the set position in the clockwise direction about the axis, the second end of the motor coupling shaft rotates the second end of the latch coupling shaft in the clockwise direction about the axis, which in turn causes torque transmitting pin to rotate in the clockwise direction about the axis causing the restraint device to disengage the ULD. In various embodiments, the motor is then configured to rotate in a counterclockwise direction about the axis back to the set position. In various embodiments, both the latch coupling shaft and the motor coupling shaft include a respective sensor which provides feedback for a position of the latch coupling shaft and thus, the restraint device, and the motor coupling shaft, respectively.

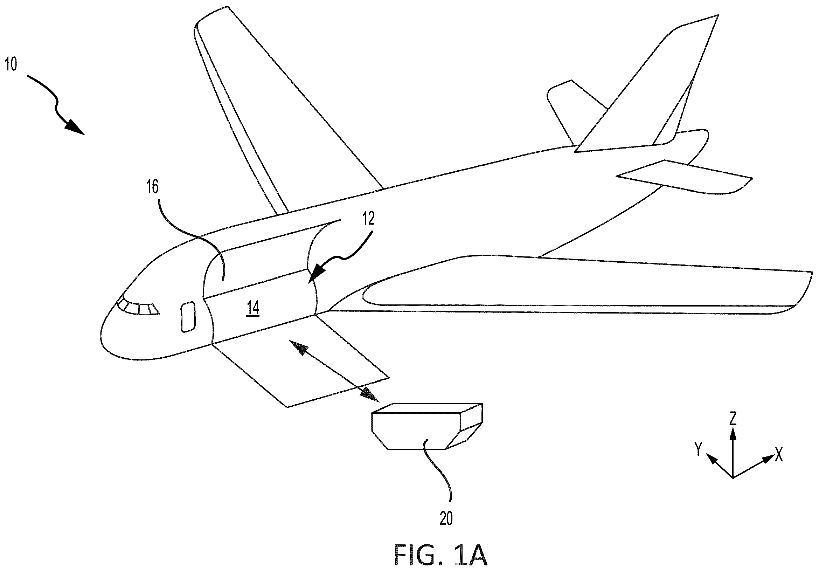

With reference to FIG. 1A, a schematic view of an aircraft 10 having a cargo deck 12 located within a cargo compartment 14 is illustrated, in accordance with various embodiments. The aircraft 10 may comprise a cargo load door 16 located, for example, at one side of a fuselage structure of the aircraft 10. A unit load device (ULD) 20, in the form of a container or pallet, for example, may be loaded through the cargo load door 16 and onto the cargo deck 12 of the aircraft 10 or, conversely, unloaded from the cargo deck 12 of the aircraft 10. In general, ULDs are available in various sizes and capacities, and are typically standardized in dimension and shape. Once loaded with items destined for shipment, the ULD 20 is transferred to the aircraft 10 and then loaded onto the aircraft 10 through the cargo load door 16 using a conveyor ramp, scissor lift or the like. Once inside the aircraft 10, the ULD 20 is moved within the cargo compartment 14 to a final stowed position. Multiple ULDs may be brought on-board the aircraft 10, with each ULD 20 being placed in a respective stowed position on the cargo deck 12. After the aircraft 10 has reached its destination, each ULD 20 is unloaded from the aircraft 10 in similar fashion, but in reverse sequence to the loading procedure. To facilitate movement of the ULD 20 along the cargo deck 12, the aircraft 10 may include a cargo handling system as described herein in accordance with various embodiments.

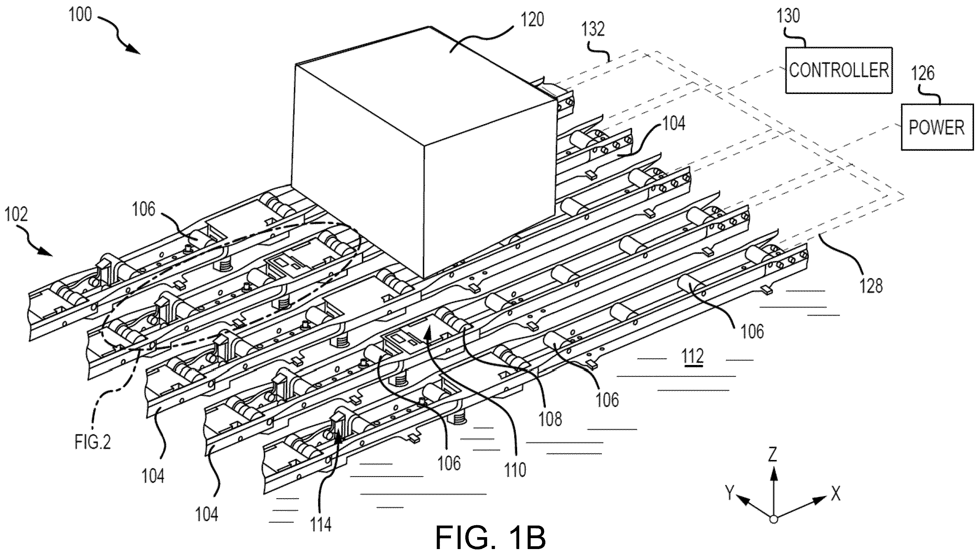

Referring now to FIG. 1B, a portion of a cargo handling system 100 is illustrated, in accordance with various embodiments. The cargo handling system 100 is illustrated with reference to an XYZ coordinate system, with the X-direction extending longitudinally and the Z-direction extending vertically with respect to an aircraft in which the cargo handling system 100 is positioned, such as, for example, the aircraft 10 described above with reference to FIG. 1A. In various embodiments, the cargo handling system 100 may define a conveyance surface 102 having a plurality of trays 104 supported by a cargo deck 112, such as, for example, the cargo deck 12 described above with reference to FIG. 1A. The plurality of trays 104 may be configured to support a unit load device (ULD) 120 (or a plurality of ULDs), such as, for example, the unit load device (ULD) 20 described above with reference to FIG. 1A. In various embodiments, the ULD 120 may comprise a container or a pallet configured to hold cargo as described above. In various embodiments, the plurality of trays 104 is disposed throughout the cargo deck 112 and may support a plurality of conveyance rollers 106, where one or more or all of the plurality of conveyance rollers 106 is a passive roller.

In various embodiments, the plurality of trays 104 may further support a plurality of power drive units (PDUs) 110, each of which may include one or more drive wheels or drive rollers 108 that may be actively powered by a motor. In various embodiments, one or more of the plurality of trays 104 is positioned longitudinally along the cargo deck 112 - *e.g.,* along the X-direction extending from the forward end to the aft end of the aircraft. In various embodiments, the plurality of conveyance rollers 106 and the one or more drive rollers 108 may be configured to facilitate transport of the ULD 120 in the forward and the aft directions along the conveyance surface 102. During loading and unloading, the ULD 120 may variously contact the one or more drive rollers 108 to provide a motive force for transporting the ULD 120 along the conveyance surface 102. Each of the plurality of PDUs 110 may include an actuator, such as, for example, an electrically operated motor, configured to drive the one or more drive rollers 108 corresponding with each such PDU 110. In various embodiments, the one or more drive rollers 108 may be raised from a lowered position beneath the conveyance surface 102 to an elevated position protruding above the conveyance surface 102 by the corresponding PDU. As used with respect to cargo handling system 100, the term "beneath" may refer to the negative Z-direction, and the term "above" may refer to the positive Z-direction with respect to the conveyance surface 102. In the elevated position, the one or more drive rollers 108 variously contact and drive the ULD 120 that otherwise rides on the plurality of conveyance rollers 106. Other types of PDUs, which can also be used in various embodiments of the present disclosure, may include a drive roller that is held or biased in a position above the conveyance surface by a spring. PDUs as disclosed herein may be any type of electrically powered rollers that may be selectively energized to propel or drive the ULD 120 in a desired direction over the cargo deck 112 of the aircraft. The plurality of trays 104 may further support a plurality of restraint devices 114. In various embodiments, each of the plurality of restraint devices 114 may be configured to rotate downward as the ULD 120 passes over and along the conveyance surface 102. Once the ULD 120 passes over any such one of the plurality of restraint devices 114, such restraint device 114 returns to its upright position, either by a motor driven actuator or a bias member (e.g., spring), thereby restraining or preventing the ULD 120 from translating in the opposite direction.

In various embodiments, the cargo handling system 100 may include a system controller 130 in communication with each of the plurality of PDUs 110 via a plurality of channels 132. Each of the plurality of channels 132 may be a data bus, such as, for example, a controller area network (CAN) bus. An operator may selectively control operation of the plurality of PDUs 110 using the system controller 130. In various embodiments, the system controller 130 may be configured to selectively activate or deactivate the plurality of PDUs 110. Thus, the cargo handling system 100 may receive operator input through the system controller 130 to control the plurality of PDUs 110 in order to manipulate movement of the ULD 120 over the conveyance surface 102 and into a desired position on the cargo deck 112. In various embodiments, the system controller 130 may include a general-purpose processor, a digital signal processor (DSP), an application specific integrated circuit (ASIC), a field programmable gate array (FPGA) or some other programmable logic device, discrete gate or transistor logic, discrete hardware components, or any combination thereof. The cargo handling system 100 may also include a power source 126 configured to supply power to the plurality of PDUs 110 or to the plurality of restraint devices 114 via one or more power busses 128. The system controller 130 may be complimented by or substituted with an agent-based control system, whereby control of each PDU and associated componentry - *e.g.,* the restraint devices - is performed by individual unit controllers associated with each of the PDUs and configured to communicate between each other.

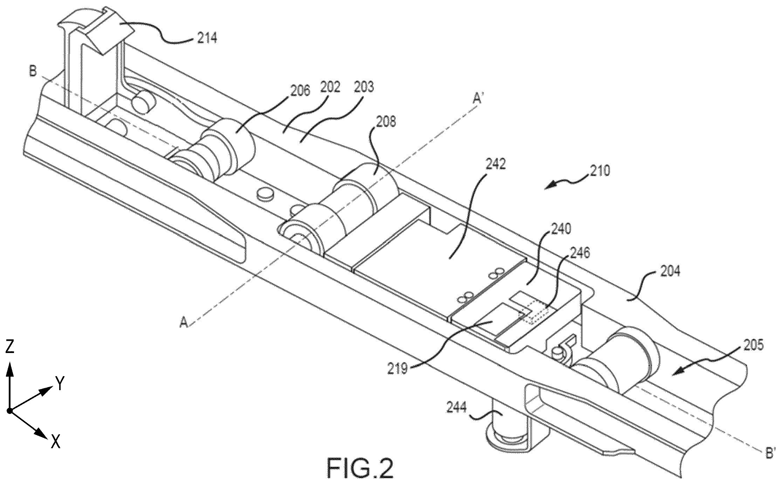

Referring now to FIG. 2, a PDU 210, such as for example, one of the plurality of PDUs 110 described above with reference to FIG. 1B, is illustrated disposed in a tray 204, in accordance with various embodiments. The PDU 210 may rotate the drive roller 208 in one of two possible directions (*e*.*g*., clockwise or counterclockwise) to propel the ULD in a direction parallel to the longitudinal axis B-B' of the tray 204. The PDU 210 may comprise a unit controller 240, a unit motor 242 and a drive roller 208 mounted within an interior section 205 of the tray 204. The drive roller 208 may comprise a cylindrical wheel coupled to a drive shaft and configured to rotate about an axis A-A'. The drive roller 208 may be in mechanical communication with the unit motor 242, which may be, for example, an electromagnetic, electromechanical or electrohydraulic actuator or other servomechanism. The PDU 210 may further include gear assemblies and other related components for turning or raising the drive roller 208 so that the drive roller 208 may extend, at least partially, above a conveyance surface 202 which, in various embodiments, may be defined as the uppermost surface 203 of the tray 204. At least partial extension of the drive roller 208 above the conveyance surface 202 facilitates contact between the drive roller 208 and a lower surface of a ULD, such as, for example, the ULD 120 described above with reference to FIG. 1B. In various embodiments, the unit controller 240 is configured to control operation of the drive roller 208. The unit controller 240 may include a processor and a tangible, non-transitory memory. The processor may comprise one or more logic modules that implement logic to control rotation and elevation of the drive roller 208. In various embodiments, the PDU 210 may comprise other electrical devices to implement drive logic. In various embodiments, a connector 244 is used to couple the electronics of the PDU 210 to a power source and a system controller, such as, for example, the system controller 130 described above with reference to FIG. 1B. The connector 244 may have pins or slots and may be configured to couple to a wiring harness having pin programing. The unit controller 240 may be configured to receive commands from the system controller through the connector 244 in order to control operation of the unit motor 242.

In addition, a restraint device 214, such as, for example, one of the plurality of restraint devices 114 described above with reference to FIG. 1B, is illustrated as disposed within the tray 204 and configured to operate between a stowed position, whereby the ULD may pass over the restraint device, and a deployed position (as illustrated), whereby the ULD is restrained or prevented from translation in a longitudinal direction (*e*.*g*., along a longitudinal axis B-B') without the restraint device 214 first being returned to the stowed position.

In various embodiments, the PDU 210 may also include a radio frequency identification device or RFID device 246, or similar device, configured to store, transmit or receive information or data - *e*.*g*., operational status or location data. Additionally, a ULD sensor 219 may be disposed within the tray 204 and configured to detect the presence of a ULD as the ULD is positioned over or proximate to the PDU 210 or the restraint device 214. In various embodiments, the ULD sensor 219 may include any type of sensor capable of detecting the presence of a ULD. For example, in various embodiments, the ULD sensor 219 may comprise a proximity sensor, a capacitive sensor, a capacitive displacement sensor, a Doppler effect sensor, an eddy-current sensor, a laser rangefinder sensor, a magnetic sensor, an active or passive optical sensor, an active or passive thermal sensor, a photocell sensor, a radar sensor, a sonar sensor, a lidar sensor, an ultrasonic sensor or the like.

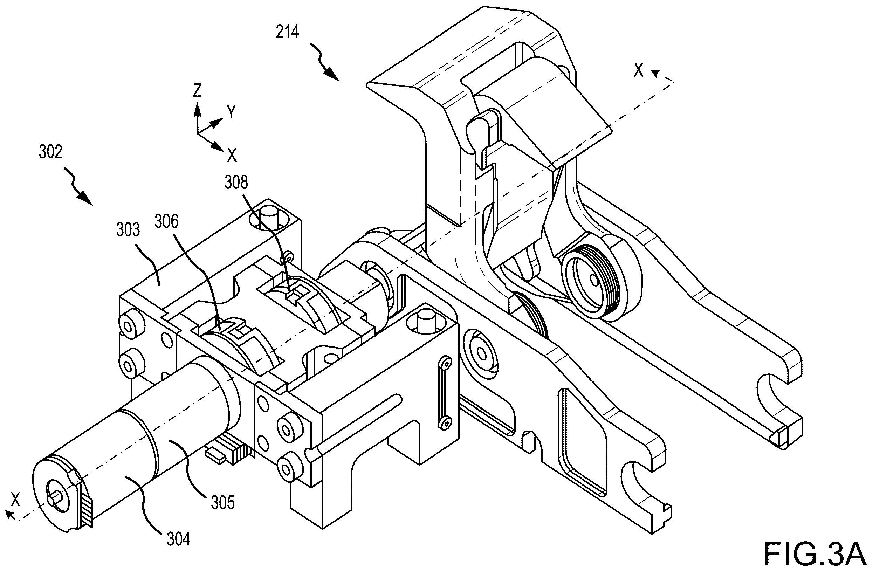

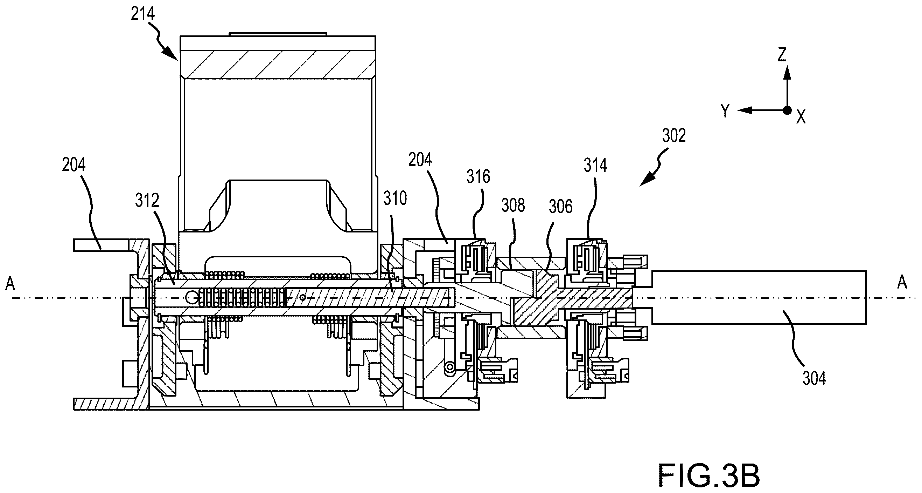

Referring now to FIGS. 3A and 3B, an isometric view and a cross-sectional view along line X-X of a cargo restraint assembly including an automated latching mechanism coupled to a restraint device 214, such as, for example, restraint device 214 described above with reference to FIG. 2 or one of the plurality of restraint devices 114 described above with reference to FIG. 1B, is illustrated, in accordance with various embodiments. In various embodiments, the automated latching mechanism 302 is disposed within a structure 303. In various embodiments, the structure 303 is a device that encloses the automated latching mechanism 302. In various embodiments the structure 303 is configured to couple to a tray, such as tray 204 of FIG. 2, within which the restraint device 214 is located. In that regard, in various embodiments, the structure 303 maintains a mechanical coupling of the automated latching mechanism 302 to restraint device 214. In various embodiments, the automated latching mechanism 302 includes motor 304, a motor coupling shaft 306, a latch coupling shaft 308, a torque transmitting pin 310 within a modified shaft 312, a motor coupling shaft sensor 314, and a latch coupling shaft sensor 316. In various embodiments, the motor 304 may be a gear head motor, i.e. a motor with a gear train 305. In various embodiments the motor 304 may be, for example, an electromagnetic, electromechanical, or electrohydraulic actuator or other servomechanism. In various embodiments, the latch coupling shaft 308 interfaces with the motor coupling shaft 306, which is described hereafter. In various embodiments, a first end of the latch coupling shaft 308 is coupled to the torque transmitting pin 310 within the modified shaft 312 within the restraint device 214. In various embodiments, the latch coupling shaft 308 may be coupled to the torque transmitting pin 310 utilizing a friction disk.

In various embodiments, the torque transmitting pin 310 is configured to translate outward in a first lateral direction, i.e., a negative y-direction, for automated latching or unlatching of a ULD and is further configured to translate inward in a second lateral direction, i.e. in a positive y-direction, opposite the first direction, for assembly, disassembly, or maintenance, among others, of the restraint device 214. In various embodiments, the translation of the torque transmitting pin 310 inward or outward may be controlled via an electromagnet and/or solenoid. In various embodiments, a first end of the motor coupling shaft 306 is coupled to the motor 304. In various embodiments, the motor 304 is configured to rotate the motor coupling shaft 306 from a set position in a first rotational direction, such as a counterclockwise direction, about axis A and then rotate the motor coupling shaft 306 in a second rotational direction opposite the first rotational direction, such as a clockwise direction, about the axis A back to the set position as well as rotate the motor coupling shaft 306 from the set position in the second rotational direction, such as a clockwise direction, about the axis A and then rotate the motor coupling shaft 306 in the first rotational direction opposite the second rotational direction, such as a counterclockwise direction, about the axis A back to the set position. In various embodiments, a second end of the motor coupling shaft 306 interfaces with a second end of the latch coupling shaft 308. While the various embodiments utilize counterclockwise direction as associated with the first rotational direction and clockwise direction as associated with the second rotational direction, the various embodiments may also utilize clockwise direction as being associated with the first rotational direction and counterclockwise direction as being associated with the second rotational direction. Accordingly, while hereafter counterclockwise direction and clockwise direction are utilized, the opposite of these rotational directions is also possible.

In various embodiments, responsive to the motor 304 receiving a command to activate, i.e. erect, the restraint device 214 and engage a unit load device (ULD), the motor 304 is configured to rotate the motor coupling shaft 306 from the set position in the counterclockwise direction about the axis A, the second end of the motor coupling shaft 306 rotates the second end of the latch coupling shaft 308 in the counterclockwise direction about the axis A, which in turn causes torque transmitting pin 310 and thus, the modified shaft 312, to rotate in the counterclockwise direction about the axis causing the restraint device 214 to engage the ULD. In various embodiments, responsive to the motor 304 receiving a command to revert to a set position after the restraint device 214 has engaged the ULD as determined based on one or more sensor indicators, the motor 304 is then configured to rotate the motor coupling shaft 306 in a clockwise direction about the axis A back to the set position. In various embodiments, responsive to the motor 304 receiving a command to deactivate, i.e. retract, the restraint device 214 and disengage the ULD, the motor 304 is configured to rotate the motor coupling shaft 306 from the set position in the clockwise direction about the axis A, the second end of the motor coupling shaft 306 rotates the second end of the latch coupling shaft 308 in the clockwise direction about the axis A, which in turn causes torque transmitting pin 310 and thus, the modified shaft 312, to rotate in the clockwise direction about the axis A causing the restraint device 214 to disengage the ULD. In various embodiments, responsive to the motor 304 receiving a command to revert to a set position after the restraint device 214 has disengaged the ULD as determined based on one or more sensor indicators, the motor 304 is then configured to rotate the motor coupling shaft 306 in a counterclockwise direction about the axis A back to the set position. In various embodiments, the one or more sensor indicators may originate from a motor coupling shaft sensor 314 and/or a latch coupling shaft sensor 316. In various embodiments, the motor coupling shaft sensor 314 is mechanically coupled the motor coupling shaft 306 to provide feedback for a position of the motor coupling shaft 306. In various embodiments, the latch coupling shaft sensor 316 is mechanically coupled to the latch coupling shaft 308 to provide feedback for a position of the latch coupling shaft 308 and thus, a position of the restraint device 214. In various embodiments, both the motor coupling shaft sensor 314 and the latch coupling shaft sensor 316 provide signals of the positions of the motor coupling shaft 306 and the latch coupling shaft 308, respectively, between every 1 millisecond and every 150 milliseconds. In various embodiments, both the motor coupling shaft sensor 314 and the latch coupling shaft sensor 316 provide signals of the positions of the motor coupling shaft 306 and the latch coupling shaft 308, respectfully, between every 50 millisecond and every 125 milliseconds. In various embodiments, both the motor coupling shaft sensor 314 and the latch coupling shaft sensor 316 provide signals of the positions of the motor coupling shaft 306 and the latch coupling shaft 308, respectfully, every 100 milliseconds.

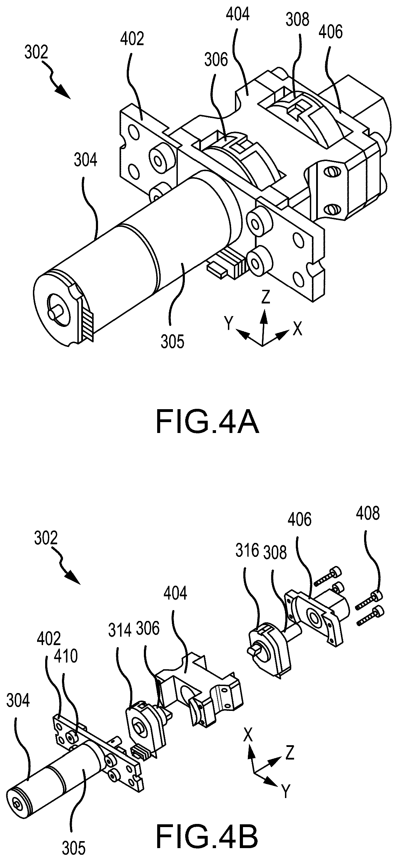

Referring now to FIGS. 4A and 4B, an isometric view and an exploded view of an automated latching mechanism is illustrated, in accordance with various embodiments. In various embodiments, the various components of the automated latching mechanism 302 are mechanically coupled together via a first structural device 402, a second structural device 404, and a third structural device 406. In various embodiments, the motor 304 is coupled to an outside of the first structural device 402. In various embodiments, motor coupling shaft 306, which is partially disposed within the motor coupling shaft sensor 314, is disposed between the first structural device 402 and the second structural device 404. In various embodiments, latch coupling shaft 308, which is partially disposed within the latch coupling shaft sensor 316, is disposed between the second structural device 404 and the third structural device 406. In various embodiments, when combined, bolts 408 coupled to nuts 410 to hold the first structural device 402, the second structural device 404, and the third structural device 406 together and thus, the motor 304, the motor coupling shaft 306 within the motor coupling shaft sensor 314, and the latch coupling shaft 308 within the latch coupling shaft sensor 316 together.

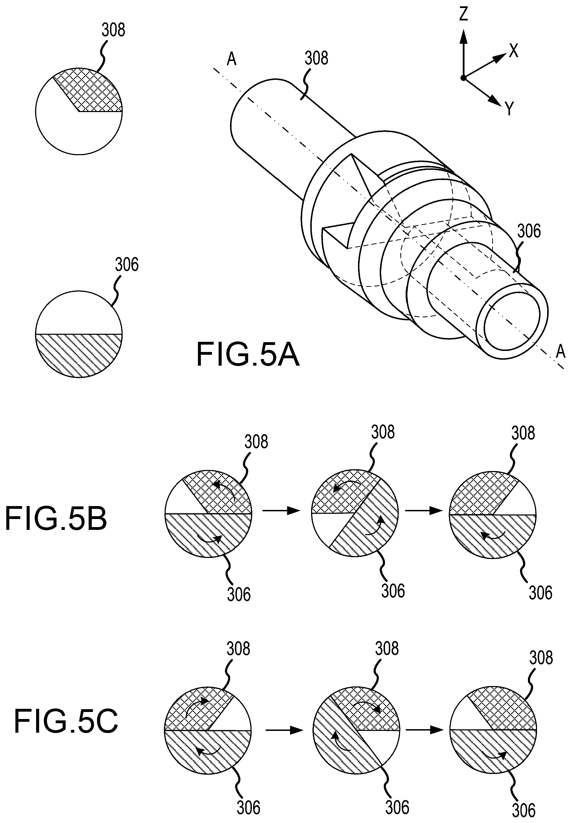

Referring now to FIGS. 5A, 5B, and 5C, an isometric view and second end views of the motor coupling shaft 306 and the latch coupling shaft 308 are illustrated, in accordance with various embodiments. As is illustrated in FIG. 5A, the second end of the motor coupling shaft 306 includes a semi-circular shaped protrusion. The second end of the latch coupling shaft 308 includes a wedge-shaped protrusion. In various embodiments, the wedge shape may be between 33 degrees and 62 degrees. The semi-circular shaped protrusion of the motor coupling shaft 306 is configured to interface with the wedge-shaped protrusion of the latch coupling shaft 308.

In various embodiments, as is illustrated in FIG. 5B and in relation to FIGS. 3A and 3B, responsive to the motor 304 rotating the motor coupling shaft 306 from the set position in the counterclockwise direction about the axis A, the second end of the motor coupling shaft 306 rotates the second end of the latch coupling shaft 308 in the counterclockwise direction about the axis A, which in turn causes torque transmitting pin 310 and thus, the modified shaft 312, to rotate in the counterclockwise direction about the axis causing the restraint device 214 to engage the ULD. In various embodiments, the motor 304 is then configured to rotate the motor coupling shaft 306 in a clockwise direction about the axis A back to the set position.

In various embodiments, as is illustrated in FIG. 5C and also in relation to of FIGS. 3A and 3B, responsive to the motor 304 rotating the motor coupling shaft 306 from the set position in the clockwise direction about the axis A, the second end of the motor coupling shaft 306 rotates the second end of the latch coupling shaft 308 in the clockwise direction about the axis A, which in turn causes torque transmitting pin 310 and thus, the modified shaft 312, to rotate in the clockwise direction about the axis A causing the restraint device 214 to disengage the ULD. In various embodiments, the motor 304 is then configured to rotate the motor coupling shaft 306 in a counterclockwise direction about the axis A back to the set position.

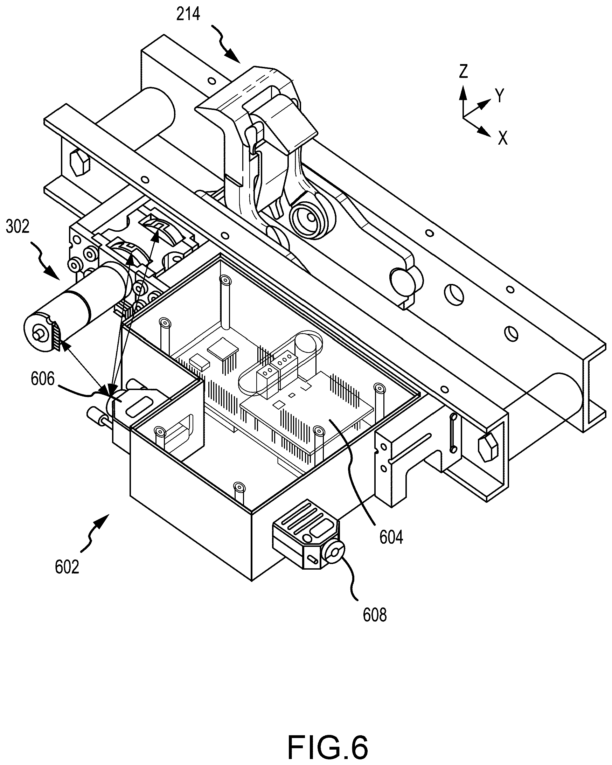

Referring now to FIG. 6, an isometric view of a controller coupled to an automated latching mechanism 302 described above with reference to FIGS. 3A and 3B, is illustrated, in accordance with various embodiments. In various embodiments, the automated latching mechanism 302, which is coupled to the restraint device 214 includes a restraint controller 602. In various embodiments, the restraint controller 602 may include a processor and a tangible, non-transitory memory located on board 604. The processor may comprise one or more logic modules that implement logic to control operation of the automated latching mechanism 302 and thus, the restraint device 214, between the stowed and the deployed positions. In that regard, in various embodiments, the restraint controller 215 may be coupled via one or more connectors 606 to the motor 304, the motor coupling shaft sensor 314, and the latch coupling shaft sensor 316. In various embodiment, the restraint controller 215 may be coupled via one or more connectors 608 to the system controller 130 of FIG. 1B and/or the power source 126 of FIG. 1B.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A cargo restraint assembly for a cargo handling system, comprising:
a restraint device (114, 214), the restraint device comprising:
a shaft (312); and
a torque transmitting pin (310) positioned within the shaft and configured to rotate the shaft; and
an automated latching mechanism (302) coupled to the restraint device (114, 214), the automated latching mechanism comprising:
a motor (304);
a motor coupling shaft (306) coupled to the motor; and
a latch coupling shaft (308) coupled to the torque transmitting pin (310) and configured to interface with the motor coupling shaft (306),
wherein, responsive to the motor (304) receiving a first command to activate the restraint device (114, 214) and engage a unit load device (ULD), rotating, by the motor (304),
the motor coupling shaft (306) in a first rotational direction,
wherein, responsive to the motor coupling shaft (306) rotating in the first rotational direction, rotating, by the motor coupling shaft, the latch coupling shaft (308) in the first rotational direction,
wherein, responsive to the latch coupling shaft (308) rotating in the first rotational direction, rotating, by the latch coupling shaft, the torque transmitting pin (310) in the first rotational direction thereby causing the restraint device (114, 214) to engage the ULD,
wherein a first end of the motor coupling shaft (306) is coupled to the motor (304),
wherein a first end of the latch coupling shaft (308) is coupled to the torque transmitting pin (310),
**characterised in that** a second end of the motor coupling shaft (306) includes a semi-circular shaped protrusion,
a second end of the latch coupling shaft (308) includes a wedge-shaped protrusion, and
the semi-circular shaped protrusion of the motor coupling shaft (306) is configured to interface with the wedge-shaped protrusion of the latch coupling shaft (308).

2. The cargo restraint assembly of claim 1, further comprising:
wherein, responsive to the motor receiving a second command to revert to a set position after the restraint device (114, 214) has engaged the ULD, rotating, by the motor, the motor coupling shaft in a second rotational direction opposite the first rotational direction to the set position.

3. The cargo restraint assembly of claim 2, wherein the second command to revert to the set position after the restraint device (114, 214) has engaged the ULD is generated based on a sensor indicator from at least one of a motor coupling shaft sensor or a latch coupling shaft sensor.

4. The cargo restraint assembly of claim 1, further comprising:
wherein, responsive to the motor receiving a third command to deactivate the restraint device (114, 214) and disengage a unit load device (ULD), rotating, by the motor, the motor coupling shaft in a second rotational direction opposite the first rotational direction,
wherein, responsive to the motor coupling shaft rotating in the second rotational direction, rotating, by the motor coupling shaft, the latch coupling shaft in the second rotational direction, and
wherein, responsive to the latch coupling shaft rotating in the second rotational direction, rotating, by the latch coupling shaft, the torque transmitting pin in the second rotational direction thereby causing the restraint device (114, 214) to disengage the ULD.

5. The cargo restraint assembly of claim 4, further comprising:
wherein, responsive to the motor receiving a fourth command to revert to a set position after the restraint device (114, 214) has disengaged the ULD, rotating, by the motor, the motor coupling shaft in the second rotational direction to the set position.

6. The cargo restraint assembly of claim 5, wherein the fourth command to revert to the set position after the restraint device (114, 214) has disengaged the ULD is generated based on a sensor indicator from at least one of a motor coupling shaft sensor or a latch coupling shaft sensor.

7. The cargo restraint assembly of any preceding claim,
wherein the torque transmitting pin is configured to translate outward in a first lateral direction for coupling to the automated latching mechanism, and
wherein the torque transmitting pin is configured to translate inward in a second lateral direction, opposite the first lateral direction, for at least one of assembly, disassembly, or maintenance of the restraint device (114, 214).

8. A cargo handling system (100), comprising:
a plurality of cargo restraint assemblies of claim 1.

9. An aircraft (10), comprising:
a cargo deck (12); and
a cargo handling system (100) disposed on the cargo deck (12), the cargo handling system comprising:
a plurality of cargo restraint assemblies of claim 1.

## Patentansprüche

1. Frachtrückhaltebaugruppe für ein Frachthandhabungssystem, umfassend:
eine Rückhaltevorrichtung (114, 214), wobei die Rückhaltevorrichtung umfasst:
eine Welle (312); und
einen Drehmomentübertragungsstift (310), der innerhalb der Welle angeordnet und dazu konfiguriert ist, die Welle zu drehen; und
einen automatisierten Verriegelungsmechanismus (302), der mit der Rückhaltevorrichtung (114, 214) gekoppelt ist, wobei der automatisierte Verriegelungsmechanismus umfasst:
einen Motor (304);
eine Motorkupplungswelle (306), die mit dem Motor gekoppelt ist; und
eine Verriegelungskupplungswelle (308), die mit dem Drehmomentübertragungsstift (310) gekoppelt und dazu konfiguriert ist, mit der Motorkupplungswelle (306) zusammenzuwirken,
wobei in Reaktion darauf, dass der Motor (304) einen ersten Befehl empfängt, die Rückhaltevorrichtung (114, 214) zu aktivieren und eine Einheitsladevorrichtung (ULD) in Eingriff zu bringen, durch den Motor (304),
die Motorkupplungswelle (306) in einer ersten Drehrichtung gedreht wird,
wobei in Reaktion darauf, dass sich die Motorkupplungswelle (306) in der ersten Drehrichtung dreht, durch die Motorkupplungswelle die Verriegelungskupplungswelle (308) in der ersten Drehrichtung gedreht wird,
wobei in Reaktion darauf, dass sich die Verriegelungskupplungswelle (308) in der ersten Drehrichtung dreht, durch die Verriegelungskupplungswelle der Drehmomentübertragungsstift (310) in der ersten Drehrichtung gedreht wird, wodurch die Rückhaltevorrichtung (114, 214) mit der ULD in Eingriff kommt,
wobei ein erstes Ende der Motorkupplungswelle (306) mit dem Motor (304) gekoppelt ist,
wobei ein erstes Ende der Verriegelungskupplungswelle (308) mit dem Drehmomentübertragungsstift (310) gekoppelt ist,
**dadurch gekennzeichnet, dass** ein zweites Ende der Motorkupplungswelle (306) einen halbkreisförmigen Vorsprung umfasst,
ein zweites Ende der Verriegelungskupplungswelle (308) einen keilförmigen Vorsprung umfasst, und
der halbkreisförmige Vorsprung der Motorkupplungswelle (306) dazu konfiguriert ist, mit dem keilförmigen Vorsprung der Verriegelungskupplungswelle (308) zusammenzuwirken.

2. Frachtrückhaltebaugruppe nach Anspruch 1, ferner umfassend: wobei in Reaktion darauf, dass der Motor einen zweiten Befehl empfängt, in eine eingestellte Position zurückzukehren, nachdem die Rückhaltevorrichtung (114, 214) mit der ULD in Eingriff gekommen ist, durch den Motor die Motorkupplungswelle in einer zweiten Drehrichtung, die der ersten Drehrichtung entgegengesetzt ist, in die eingestellte Position gedreht wird.

3. Frachtrückhaltebaugruppe nach Anspruch 2, wobei der zweite Befehl zum Zurückkehren in die eingestellte Position, nachdem die Rückhaltevorrichtung (114, 214) mit der ULD in Eingriff gekommen ist, auf der Grundlage einer Sensoranzeige von mindestens einem von einem Motorkupplungswellensensor oder einem Verriegelungskupplungswellensensor erzeugt wird.

4. Frachtrückhaltebaugruppe nach Anspruch 1, ferner umfassend:
wobei in Reaktion darauf, dass der Motor einen dritten Befehl zum Deaktivieren der Rückhaltevorrichtung (114, 214) und zum Außer-Eingriff-Bringen einer Einheitsladevorrichtung (ULD) empfängt, durch den Motor die Motorkupplungswelle in einer zweiten Drehrichtung, die der ersten Drehrichtung entgegengesetzt ist, gedreht wird,
wobei in Reaktion darauf, dass sich die Motorkupplungswelle in der zweiten Drehrichtung dreht, durch die Motorkupplungswelle die Verriegelungskupplungswelle in der zweiten Drehrichtung gedreht wird, und
wobei in Reaktion darauf, dass sich die Verriegelungskupplungswelle in der zweiten Drehrichtung dreht, durch die Verriegelungskupplungswelle der Drehmomentübertragungsstift in der zweiten Drehrichtung gedreht wird, wodurch die Rückhaltevorrichtung (114, 214) außer Eingriff mit der ULD kommt.

5. Frachtrückhaltebaugruppe nach Anspruch 4, ferner umfassend: wobei in Reaktion darauf, dass der Motor einen vierten Befehl empfängt, in eine eingestellte Position zurückzukehren, nachdem die Rückhaltevorrichtung (114, 214) die ULD außer Eingriff gebracht hat, durch den Motor die Motorkupplungswelle in der zweiten Drehrichtung in die eingestellte Position gedreht wird.

6. Frachtrückhaltebaugruppe nach Anspruch 5, wobei der vierte Befehl zum Zurückkehren in die eingestellte Position, nachdem die Rückhaltevorrichtung (114, 214) die ULD außer Eingriff gebracht hat, auf der Grundlage einer Sensoranzeige von mindestens einem von einem Motorkupplungswellensensor oder einem Verriegelungskupplungswellensensor erzeugt wird.

7. Frachtrückhaltebaugruppe nach einem der vorhergehenden Ansprüche,
wobei der Drehmomentübertragungsstift dazu konfiguriert ist, sich in einer ersten seitlichen Richtung zum Koppeln mit dem automatisierten Verriegelungsmechanismus nach außen zu verschieben, und
wobei der Drehmomentübertragungsstift dazu konfiguriert ist, sich in einer zweiten seitlichen Richtung, die der ersten seitlichen Richtung entgegengesetzt ist, für mindestens eines von Montage, Demontage oder Wartung der Rückhaltevorrichtung (114, 214) nach innen zu verschieben.

8. Frachthandhabungssystem (100), umfassend:
eine Mehrzahl von Frachtrückhaltebaugruppen nach Anspruch 1.

9. Luftfahrzeug (10), umfassend:
ein Frachtdeck (12); und
ein auf dem Frachtdeck (12) angeordnetes Frachthandhabungssystem (100), wobei das Frachthandhabungssystem umfasst:
eine Mehrzahl von Frachtrückhaltebaugruppen nach Anspruch 1.

## Revendications

1. Ensemble de retenue de fret destiné à un système de manutention de fret, comprenant :
un dispositif de retenue (114, 214), le dispositif de retenue comprenant :
un arbre (312) ; et
une goupille de transmission de couple (310) positionnée à l'intérieur de l'arbre et configurée pour faire tourner l'arbre ; et
un mécanisme de verrouillage automatisé (302) accouplé au dispositif de retenue (114, 214), le mécanisme de verrouillage automatisé comprenant :
un moteur (304) ;
un arbre d'accouplement de moteur (306) accouplé au moteur ; et
un arbre d'accouplement de verrouillage (308) accouplé à la goupille de transmission de couple (310) et configuré pour s'interfacer avec l'arbre d'accouplement de moteur (306),
dans lequel, en réponse à la réception par le moteur (304) d'une première commande visant à activer le dispositif de retenue (114, 214) et à venir en prise avec une unité de chargement (ULD), le moteur (304) fait tourner,
de l'arbre d'accouplement de moteur (306) dans une première direction de rotation,
dans lequel, en réponse à la rotation de l'arbre d'accouplement de moteur (306) dans la première direction de rotation, l'arbre d'accouplement de moteur fait tourner l'arbre d'accouplement de verrouillage (308) dans la première direction de rotation,
dans lequel, en réponse à la rotation de l'arbre d'accouplement de verrouillage (308) dans la première direction de rotation, l'arbre d'accouplement de verrouillage fait tourner la goupille de transmission de couple (310) dans la première direction de rotation, ce qui amène ainsi le dispositif de retenue (114, 214) à venir en prise avec l'ULD,
dans lequel une première extrémité de l'arbre d'accouplement de moteur (306) est accouplée au moteur (304),
dans lequel une première extrémité de l'arbre d'accouplement de verrouillage (308) est accouplée à la goupille de transmission de couple (310),
**caractérisé en ce qu'**une seconde extrémité de l'arbre d'accouplement de moteur (306) comporte une saillie de forme semi-circulaire,
une seconde extrémité de l'arbre d'accouplement de verrouillage (308) comporte une saillie en forme de coin, et
la saillie de forme semi-circulaire de l'arbre d'accouplement de moteur (306) est configurée pour s'interfacer avec la saillie en forme de coin de l'arbre d'accouplement de verrouillage (308).

2. Ensemble de retenue de fret selon la revendication 1, comprenant en outre :
dans lequel, en réponse à la réception par le moteur d'une deuxième commande visant à revenir à une position définie après la mise en prise du dispositif de retenue (114, 214) avec l'ULD, le moteur fait tourner l'arbre d'accouplement de moteur dans une seconde direction de rotation opposée à la première direction de rotation vers la position définie.

3. Ensemble de retenue de fret selon la revendication 2, dans lequel la deuxième commande visant à revenir à la position définie après la mise en prise du dispositif de retenue (114, 214) avec l'ULD est générée sur la base d'un indicateur de capteur à partir d'au moins l'un d'un capteur d'arbre d'accouplement de moteur ou d'un capteur d'arbre d'accouplement de verrouillage.

4. Ensemble de retenue de fret selon la revendication 1, comprenant en outre :
dans lequel, en réponse à la réception par le moteur d'une troisième commande visant à désactiver le dispositif de retenue (114, 214) et à libérer une unité de chargement (ULD), le moteur fait tourner l'arbre d'accouplement de moteur dans une seconde direction de rotation opposée à la première direction de rotation,
dans lequel, en réponse à la rotation de l'arbre d'accouplement de moteur dans la seconde direction de rotation, l'arbre d'accouplement de moteur fait tourner l'arbre d'accouplement de verrouillage dans la seconde direction de rotation, et
dans lequel, en réponse à la rotation de l'arbre d'accouplement de verrouillage dans la seconde direction de rotation, l'arbre d'accouplement de verrouillage fait tourner la goupille de transmission de couple dans la seconde direction de rotation, ce qui amène ainsi le dispositif de retenue (114, 214) à se libérer de l'ULD.

5. Ensemble de retenue de fret selon la revendication 4, comprenant en outre :
dans lequel, en réponse à la réception par le moteur d'une quatrième commande visant à revenir à une position définie après la libération du dispositif de retenue (114, 214) de l'ULD, le moteur fait tourner l'arbre d'accouplement de moteur dans la seconde direction de rotation vers la position définie.

6. Ensemble de retenue de fret selon la revendication 5, dans lequel la quatrième commande visant à revenir à la position définie après la libération du dispositif de retenue (114, 214) avec l'ULD est générée sur la base d'un indicateur de capteur à partir d'au moins l'un d'un capteur d'arbre d'accouplement de moteur ou d'un capteur d'arbre d'accouplement de verrouillage.

7. Ensemble de retenue de fret selon l'une quelconque revendication précédente,
dans lequel la goupille de transmission de couple est configurée pour se déplacer vers l'extérieur dans une première direction latérale afin de s'accoupler au mécanisme de verrouillage automatisé, et
dans lequel la goupille de transmission de couple est configurée pour se déplacer vers l'intérieur dans une seconde direction latérale, opposée à la première direction latérale, pour au moins l'une opération parmi l'assemblage, le désassemblage ou l'entretien du dispositif de retenue (114, 214).

8. Système de manutention de fret (100), comprenant :
une pluralité d'ensembles de retenue de fret selon la revendication 1.

9. Aéronef (10), comprenant :
un pont de chargement (12) ; et
un système de manutention de fret (100) disposé sur le pont de chargement (12), le système de manutention de fret comprenant : une pluralité d'ensembles de retenue de fret selon la revendication 1.
